# FASCICULE DE BREVET EUROPEEN

(11) **EP 2 373 027 B1**
(45) Date de publication et mention de la délivrance du brevet: **13.12.2017**
(21) Numéro de dépôt: 11305317.7
(22) Date de dépôt: 21.03.2011
(51) Int. Cl.: H04N 7/24

(54) **Procédé et système de transmission coopérative d'une séquence vidéo**
Verfahren und System zur kooperativen Sendung einer Videosequenz
Method and system for cooperative transmission of a video sequence.

(30) Priorité: 23.03.2010 FR 1001138
(43) Date de publication de la demande: 05.10.2011
(73) Titulaire: Thales, 92200 Neuilly Sur Seine (FR)
(72) Inventeur: Fracchia, Roberta, 92704, COLOMBES CEDEX (FR)
(74) Mandataire: Lavoix

(56) Documents cités:
- XIAOFENG XU ET AL: "Layered cooperative source and channel coding", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 2, 16 mai 2005 (2005-05-16), pages 1200-1204, XP010825477, DOI: DOI:10.1109/ICC.2005.1494537 ISBN: 978-0-7803-8938-0
- HOI YIN SHUTOY ET AL: "Cooperative Source and Channel Coding for Wireless Multimedia Communications", IEEE JOURNAL OF SELECTED TOPICS IN SIGNAL PROCESSING, IEEE, US, vol. 1, no. 2, 1 août 2007 (2007-08-01), pages 295-307, XP011187653, ISSN: 1932-4553, DOI: DOI:10.1109/JSTSP.2007.901516
- FEILU LIU ET AL: "MAC 17-3 - A MAC-PHY Cross-Layer Protocol for Ad Hoc Wireless Networks", WIRELESS COMMUNICATIONS AND NETWORKING CONFERENCE, 2008. WCNC 2008. IEEE, IEEE, PISCATAWAY, NJ, USA, 31 mars 2008 (2008-03-31), pages 1792-1797, XP031243904, ISBN: 978-1-4244-1997-5
- OZGU ALAY ET AL: "Implementing a Cooperative MAC Protocol for Wireless Video Multicast", WIRELESS COMMUNICATIONS AND NETWORKING CONFERENCE, 2009. WCNC 2009. IEEE, IEEE, PISCATAWAY, NJ, USA, 5 avril 2009 (2009-04-05), pages 1-6, XP031454239, ISBN: 978-1-4244-2947-9
- HAUSL C ET AL: "Relay communication with hierarchical modulation", IEEE COMMUNICATIONS LETTERS, IEEE SERVICE CENTER, PISCATAWAY, NJ, US, vol. 11, no. 1, 1 January 2007 (2007-01-01), pages 64-66, XP011379739, ISSN: 1089-7798, DOI: 10.1109/LCOMM.2007.061419
- CHENG-GANG WANG ET AL: "Based on MBMS: A General Structure Design of Relay Network for Cellular System", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 September 2009 (2009-09-24), pages 1-4, XP031555764, ISBN: 978-1-4244-3692-7
- SAHINOGLU Z ET AL: "Power efficient transmission of layered video through wireless proxy servers", ELECTRONICS LETTERS, IEE STEVENAGE, GB, vol. 39, no. 8, 17 April 2003 (2003-04-17) , pages 698-699, XP006020164, ISSN: 0013-5194, DOI: 10.1049/EL:20030432

## Description

La présente invention concerne un procédé et un système de transmission d'une séquence vidéo depuis un terminal émetteur comportant au moins une interface radio de courte portée et une interface radio de longue portée vers au moins un terminal récepteur.

Elle s'applique en particulier à la transmission de séquences vidéo « en direct », également appelé « streaming », les données vidéo étant consommées, par exemple visionnées, au fur et à mesure de leur réception par le destinataire.

Ces données vidéo ont pour caractéristique d'avoir une durée de vie utile limitée, les données devant impérativement être reçues et traitées par le destinataire avant une certaine échéance, qui est l'instant auquel ces données sont requises pour être visionnées. Au-delà de cette échéance, ces données deviennent inutiles.

Ainsi, pour être envoyées sur un réseau à débit limité, par exemple par une liaison radio, une séquence vidéo doit faire l'objet d'une compression, de manière à assurer une qualité de réception acceptable.

Il est connu du document « Cellular Controlled Short-Range Communication for Cooperative P2P Networking » (Frank H.P. Fitzek et al., WWRF 17, 2006) une méthode qui combine des technologies de communication radio à courte portée et à longue portée pour augmenter le débit de transmission de données depuis une station de base vers au moins deux terminaux récepteurs aptes à s'échanger des données selon une communication courte portée, tout en réduisant la consommation d'énergie nécessaire à cette transmission. L'état de l'art est représenté, entre autres, par les documents suivants: XIAOFENG XU ET AL: "Layered cooperative source and channel coding",COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 2, 16 mai 2005.

HAUSL C ET AL: "Relay communication with hierarchical modulation", IEEE COMMUNICATIONS LETTERS, IEEE SERVICE CENTER, PISCATAWAY, NJ, US, vol. 11, no. 1, 1 janvier 2007.

CHENG-GANG WANG ET AL: "Based on MBMS: A General Structure Design of Relay Network for Cellular System",WIRELESS COMMUNICATIONS, NETWORKING AND MOBILE COMPUTING, 2009. WICOM'09. 5TH INTERNATIONAL CONFERENCE ON, IEEE, PISCATAWAY, NJ, USA, 24 septembre 2009

SAHINOGLU Z ET AL: "Power efficient transmission of layered video through wireless proxy servers", ELECTRONICS LETTERS, IEE STEVENAGE, GB, vol. 39, no. 8, 17 avril 2003.

Dans l'ensemble de la description et des revendications, on entendra par liaison radio courte portée une liaison de type WLAN, par exemple une liaison Wi-Fi, établie sur une distance maximale d'environ quelques centaines de mètres. Par ailleurs, on désignera par liaison radio longue portée une liaison radio de type WAN, par exemple une liaison WiMAX, sur une portée pouvant atteindre plusieurs dizaines de kilomètres.

Selon cette méthode, au lieu d'envoyer les mêmes données à chacun des terminaux récepteurs au moyen d'une communication longue portée, la station de base transmet à chaque terminal récepteur une partie différente des données, puis chacun des terminaux récepteurs transmet aux autres terminaux, par une communication à courte portée, la partie des données qu'il a reçue.

Cependant, dans le cas de la transmission d'une séquence vidéo depuis un terminal mobile, la résolution de la séquence transmise est le plus souvent limitée par le débit possible en liaison montante du terminal mobile. En effet, la puissance de transmission radio de chaque interface radio d'un terminal mobile est limitée, à la fois pour des raisons de durée de vie de la batterie, et pour assurer le respect d'une norme fixant le taux d'absorption spécifique (SAR) maximal autorisé, c'est-à-dire le niveau maximal de radiofréquences émis par chaque interface radio. Par exemple, pour un terminal mobile muni d'une interface radio WiMAX, le débit maximal en liaison descendante est de 5,76 Mbps, alors qu'il est seulement de 115 kbps en liaison montante, c'est-à-dire environ 50 fois plus faible.

De plus, afin d'éviter les interférences que provoqueraient une émission et une réception simultanées, chaque trame d'une liaison longue portée WAN, dont la durée est de l'ordre de quelques millisecondes, est composée d'une trame descendante, pendant laquelle le terminal reçoit des paquets de données, et d'une trame montante, pendant laquelle le terminal émet des paquets de données. Chacune des trames descendante et montante a une durée prédéterminée, de telle sorte que le terminal ne peut émettre des données que pendant des périodes fixées.

Par conséquent, la transmission d'une séquence vidéo de bonne résolution « en direct » depuis un terminal mobile par une liaison radio se révèle généralement impossible.

Plusieurs solutions ont été proposées pour résoudre ce problème. Ainsi, le brevet WO02/17043 décrit une méthode de transmission d'un message, par exemple une vidéo, depuis un terminal émetteur vers un terminal récepteur, tous deux équipés de plusieurs interfaces radio de technologies différentes telles que GPRS ou CDMA. Selon cette méthode, le message est scindé en plusieurs ensembles de paquets de données, et chacun de ces ensembles est transmis par une interface radio différente du même terminal émetteur vers le même terminal récepteur. Puis, après réception de l'ensemble des fragments, le terminal récepteur recombine ceux-ci pour obtenir le message d'origine.

Cette méthode permet certes de multiplier le débit en liaison montante depuis le terminal émetteur, mais elle nécessite, pour que le gain en débit soit important, que ce terminal et le point d'accès au réseau soient équipés de plusieurs interfaces radio de technologies différentes. Or, les terminaux actuels possèdent rarement plus de deux interfaces radio de technologies différentes, et les points d'accès au réseau ne sont généralement pas munis d'interfaces radio de technologies différentes.

De manière similaire, la demande US 2008/0130496 divulgue une méthode de transmission d'une séquence vidéo depuis un terminal muni d'une pluralité d'émetteurs vers un serveur. Le terminal génère, à partir de la séquence, plusieurs paquets de données, qui sont émis par les différents émetteurs via une pluralité de canaux d'un réseau 3G. Ces paquets sont reçus puis recombinés par le serveur, qui recompose alors le signal vidéo d'origine. Ainsi, si le terminal comprend un nombre N d'émetteurs de technologie 3G, le débit en émission est multiplié d'un facteur N.

Cependant, les terminaux actuels ne sont généralement pas munis de plus d'une interface radio d'une technologie donnée. La mise en oeuvre de cette méthode nécessite donc une modification matérielle importante des terminaux existants. De plus, cette méthode implique une consommation d'énergie importante, due à la multiplication des émissions sur des liaisons longue portée.

Le but de l'invention est ainsi de permettre la transmission de données depuis un terminal émetteur, en liaison montante et à longue portée, avec un débit plus élevé que le débit autorisé par une liaison sans fil de type WAN, dont les contraintes de mise en oeuvre sont moins importantes que celles imposées par les solutions selon l'état de la technique. L'invention est définie par les revendications. Ainsi, selon ce procédé de transmission coopérative, le terminal émetteur transmet à longue portée seulement une partie des couches constitutives de la séquence vidéo, et fait appel à des terminaux proches, qui servent de relais, pour la transmission des autres couches de la séquence vidéo. Le terminal émetteur utilise ainsi à la fois sa liaison longue portée et sa liaison courte portée pour l'émission de la séquence vidéo, ce qui permet d'augmenter son débit en liaison montante.

De plus, ce procédé de transmission est avantageux d'un point de vue énergétique pour le terminal émetteur, car celui-ci n'émet qu'une partie des couches de la séquence vidéo selon une liaison à longue portée, plus consommatrice d'énergie qu'une liaison à courte portée.

Selon d'autres aspects, le procédé de transmission comporte l'une ou plusieurs des caractéristiques suivantes :
- la transmission par ladite interface radio de longue portée du terminal émetteur d'au moins toute la couche de base vers ledit terminal récepteur et la transmission, par ladite interface radio de longue portée dudit terminal de coopération, d'au moins toute la couche d'amélioration vers ledit terminal récepteur sont réalisées concomitamment ;
- le procédé comprend en outre une étape d'initiation de coopération, comprenant :
- la diffusion par ladite interface radio de courte portée du terminal émetteur d'une requête de coopération, et
- la transmission par l'interface radio de courte portée dudit terminal de coopération audit terminal émetteur d'un message d'acceptation de coopération ;
- le procédé de transmission comprend en outre une étape d'initiation de la transmission, comprenant l'envoi par ladite interface radio de courte portée du terminal émetteur audit terminal de coopération d'un message comprenant des paramètres de connexion pour l'ouverture par le terminal de coopération d'une liaison de longue portée, et des identifiants de connexion comprenant les numéros de port source et de destination, et une adresse du terminal émetteur et du terminal récepteur ;
- ladite interface radio longue portée du terminal émetteur communique selon des trames de communication comprenant successivement des trames descendantes et des trames montantes, ladite transmission par l'interface radio de courte portée du terminal émetteur de la couche d'amélioration vers ledit terminal de coopération comprend une étape de transmission de données vers ledit terminal de coopération pendant au moins une desdites trames descendantes, et ladite transmission par l'interface radio de longue portée du terminal émetteur de la couche de base et ladite transmission par l'interface radio de longue portée dudit terminal de coopération de la couche d'amélioration comprennent des étapes de transmission de données desdites couches de base et d'amélioration respectivement pendant au moins une desdites trames montantes ;
- le procédé de transmission comprend en outre une étape de réception desdites couches de base et d'amélioration par un point d'accès réseau, et une étape de transmission depuis ledit point d'accès réseau, vers ledit terminal récepteur, desdites couches de base et d'amélioration.

L'invention a également pour objet un système de transmission d'une séquence vidéo vers au moins un terminal récepteur, comprenant un terminal émetteur comportant au moins une interface radio de courte portée et une interface radio de longue portée, et au moins un terminal de coopération comportant au moins une interface radio de courte portée et une interface radio de longue portée, caractérisé en ce que ledit terminal émetteur comprend en outre :
- des moyens pour segmenter ladite séquence vidéo en une couche de base permettant l'obtention d'une séquence vidéo dégradée et au moins une couche d'amélioration, complémentaire à ladite couche de base,
- des moyens pour commander la transmission par ladite interface radio de longue portée du terminal émetteur d'au moins toute la couche de base vers ledit terminal récepteur, et
- des moyens pour commander la transmission par ladite interface radio de courte portée du terminal émetteur d'au moins toute la couche d'amélioration vers ledit terminal de coopération,
et en ce que ledit terminal de coopération comprend des moyens pour commander la transmission, par l'interface radio de longue portée du terminal de coopération, d'au moins toute la couche d'amélioration vers ledit terminal récepteur.

Selon d'autres aspects, le procédé de transmission comporte l'une ou plusieurs des caractéristiques suivantes :
- ledit terminal émetteur comprend en outre des moyens pour déterminer le débit possible entre l'interface radio de longue portée du terminal émetteur et le terminal de réception ;
- ledit terminal émetteur comprend en outre des moyens pour générer une requête de coopération et pour commander la diffusion de ladite requête par son interface radio courte portée, et ledit terminal de coopération comprend des moyens pour générer un message d'acceptation de coopération et pour commander la transmission dudit message d'acceptation de coopération audit terminal émetteur ;
- ledit terminal émetteur comprend en outre des moyens pour générer un message d'information contenant des paramètres de communication nécessaires pour la transmission par ledit terminal de coopération de ladite couche d'amélioration et pour commander la transmission dudit message d'information audit terminal de coopération.

L'invention sera davantage comprise au regard d'un exemple de réalisation de l'invention qui va maintenant être décrit en faisant référence aux figures annexées parmi lesquelles :
- la figure 1 est un schéma illustrant un réseau de communication adapté à la mise en oeuvre du procédé selon l'invention ;
- la figure 2 est un schéma représentant l'architecture de terminaux émetteurs et de coopération adaptés pour la mise en oeuvre du procédé selon l'invention ;
- le figure 3 représente un schéma synoptique illustrant la mise en oeuvre d'un procédé de transmission d'une séquence vidéo selon un mode de réalisation de l'invention.

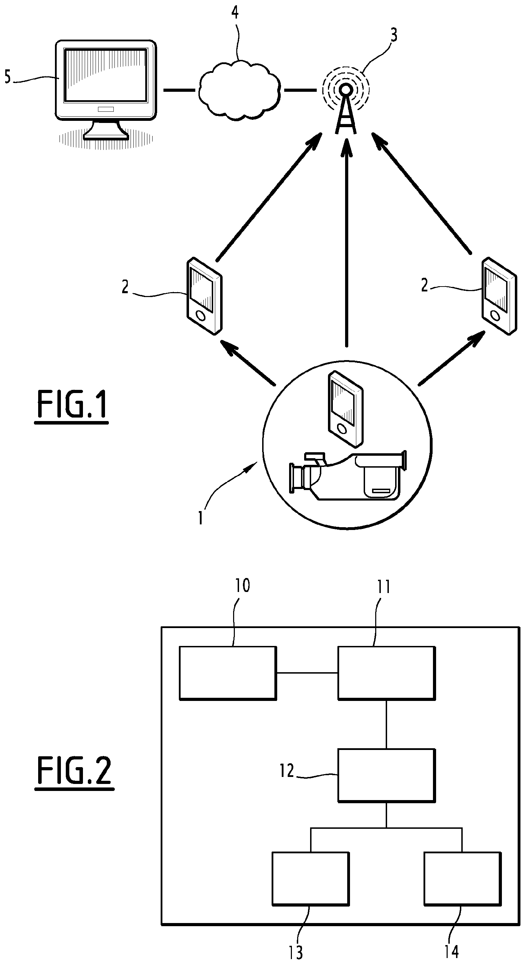

La figure 1 représente l'architecture globale d'un système dans lequel le procédé selon l'invention peut être mis en oeuvre.

Ce système comprend un terminal émetteur 1, des terminaux de coopération 2 identiques au terminal émetteur, un point d'accès au réseau 3, un réseau de communication 4 et un terminal de réception 5.

Le terminal émetteur 1, appelé par la suite terminal source, peut être n'importe quel type de dispositif comportant au moins une interface radio longue portée de type WAN, telle qu'une interface WiMAX selon la norme IEEE 802.16, et au moins une interface radio courte portée de type WLAN, par exemple une interface Wi-Fi selon la norme IEEE 802.11g, et susceptible de transmettre un flux de données à un dispositif récepteur. A titre d'exemple nullement limitatif, le terminal source 1 est un téléphone mobile.

Ce terminal source 1 est apte à communiquer, en émission et en réception, par une liaison courte portée de type WLAN, avec au moins un terminal de coopération 2. Dans l'exemple représenté sur la figure 1, deux terminaux de coopération 2 sont représentés, mais le nombre de ces terminaux 2 peut être différent. Ces terminaux de coopération 2 sont munis d'une interface radio de type WLAN de même technologie que l'interface WLAN du terminal source, et comprennent également une interface radio longue portée. Les terminaux de coopération 2 sont situés à une distance maximale de quelques centaines de mètres du terminal source 1.

Le point d'accès réseau 3 comprend une antenne radio de même technologie que l'interface longue portée des terminaux source 1 et de coopération 2, et comprend des moyens pour transmettre des données envoyées par les terminaux 1 et 2, via le réseau de communication 4, vers le terminal de réception 5, destinataire de ces données.

La figure 2 illustre, de manière simplifiée, l'architecture d'un terminal source 1 et de terminaux de coopération 2 adaptés à la transmission d'une séquence vidéo suivant le procédé de transmission selon l'invention.

Ces terminaux 1 et 2 comprennent notamment un codeur vidéo 10, un module de décision 11, un module d'adaptation 12 et au moins deux interfaces radio respectivement de type WAN 13 et WLAN 14. Le codeur vidéo 10 est relié au module de décision 11, lui-même relié aux interfaces radio 13 et 14 par l'intermédiaire du module d'adaptation 12.

A titre d'exemple, l'interface WAN 13 est une interface WiMAX, et l'interface WLAN 14 est une interface Wi-Fi utilisant le protocole IEEE 802.11g. Ces interfaces radio 13 et 14 comprennent notamment des moyens pour encapsuler les données à émettre sous la forme de paquets de données, et des moyens pour désencapsuler les paquets de données qu'elles reçoivent.

Le codeur vidéo 10 est un codeur scalable, suivant la norme H264/SVC (Scalable Video Coding, c'est-à-dire codage vidéo évolutif), capable de générer à partir d'une séquence vidéo des couches de données indépendantes, comprenant une couche de base, codée selon le standard H264/AVC, et au moins une couche d'amélioration. La couche de base contient une version basse résolution de la séquence vidéo, et les couches d'amélioration permettant d'améliorer de manière progressive la résolution de la séquence par rapport à la couche de base, et peuvent être transmises par des flux de données indépendants. Ainsi, la couche de base permet l'obtention d'une séquence vidéo de basse qualité et les couches d'amélioration permettent, en combinaison avec la couche de base, l'obtention d'une séquence vidéo de meilleure qualité.

Le module de décision 11 est apte à déterminer, lorsqu'il reçoit des flux de données depuis le codeur 10 ou depuis les interfaces radio 13 et 14, comment ces flux doivent être gérés.

Le module de décision 11 comprend ainsi des moyens pour déterminer la largeur de bande disponible entre le terminal et le point d'accès réseau 3, et le débit maximal de données que l'interface WLAN 13 peut émettre vers le point d'accès réseau 3. Le module de décision 11 comprend également des moyens pour choisir, lorsqu'il reçoit des couches de données vidéo à envoyer vers un terminal de réception 5, quel mode de transmission adopter, en fonction notamment de la quantité de données à envoyer, du débit maximal et de la bande passante vers le point d'accès réseau 3.

Le module de décision 11 comprend par ailleurs des moyens pour initier une transmission coopérative, en générant une requête de coopération qu'il transmet au module d'adaptation 12 ainsi qu'une instruction de diffusion de cette requête via l'interface WLAN 14. A réception de messages d'acceptation provenant de terminaux acceptant la requête de coopération, le module de décision 11 est apte à choisir, parmi ces terminaux, un ou plusieurs terminaux de coopération.

Le module de décision 11 comprend en outre des moyens pour générer un message d'information, à destination de terminaux de coopération 2, contenant les paramètres de communication nécessaires pour la transmission de flux de données vers le terminal de réception 5 par une liaison WAN à longue portée.

De plus, le module de décision 11 est apte à transmettre au module d'adaptation 12 les couches de données vidéo, ainsi qu'une instruction d'envoi de ces couches via la seule interface radio WAN 13, ou via l'interface radio WAN 13 et l'interface radio WLAN 14, selon le mode de transmission choisi. Le module de décision 11 est également apte à transmettre au module d'adaptation 12 une instruction de suppression d'une ou plusieurs couches de données vidéo, lorsque l'ensemble des couches générées par le codeur ne peut être transmis.

Le module de décision 11 comprend ainsi des moyens pour commander l'envoi des couches de données vidéo par l'interface WAN 13 pendant les trames montantes de l'interface WAN 13 du terminal source 1, et des moyens pour commander l'envoi des couches de données vidéo par l'interface WLAN 14 pendant les trames descendantes de l'interface WAN 13 du terminal source 1.

Par ailleurs, le module de décision 11 comprend des moyens pour décider, en fonction de critères tels que le niveau de charge de la batterie du terminal et la disponibilité du terminal pour établir une nouvelle communication, d'accepter ou de refuser une requête de coopération reçue par ce terminal, et des moyens pour générer un message d'acceptation de coopération.

Le module d'adaptation 12, conformément aux modules d'adaptation selon l'état de la technique, est apte à transmettre les flux de données qu'il reçoit du module de décision 11 vers l'interface WAN 13 ou l'interface WLAN 14, ou à supprimer ces flux, en fonction des instructions qu'il reçoit du module de décision 11.

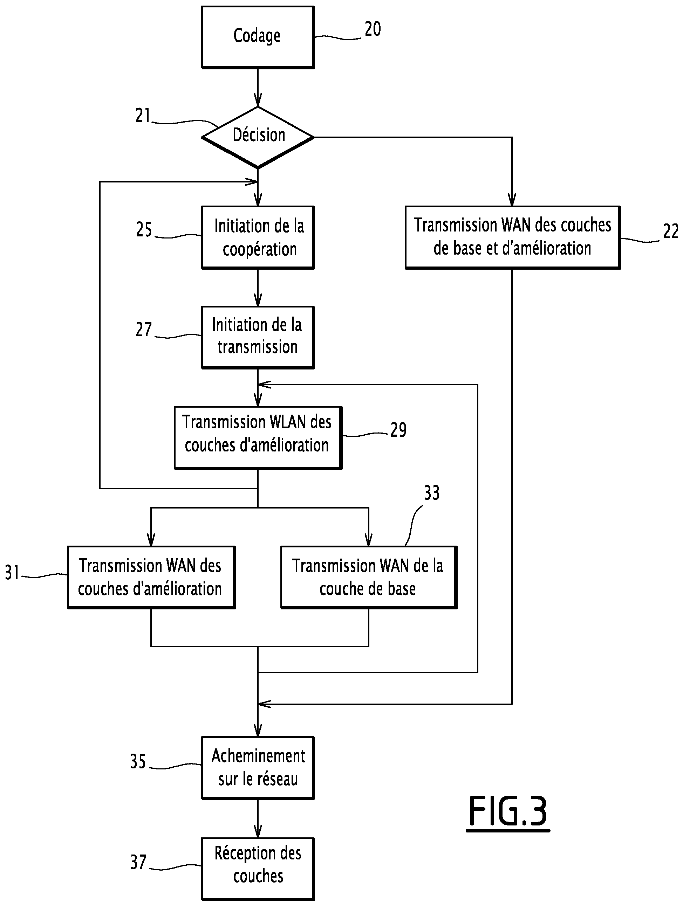

On a représenté sur la figure 3 un schéma synoptique illustrant le procédé de transmission d'une séquence vidéo selon l'invention, depuis un terminal source 1 vers un terminal de réception 5 à travers un réseau 4 tel qu'illustré sur la figure 1.

Dans une première étape de codage 20 de ce procédé, le codeur vidéo 10 du terminal source 1 génère, à partir de la séquence vidéo à transmettre, N_{L} couches de données vidéo complémentaires, comprenant chacune une partie des données constituant la séquence vidéo d'origine, qui seront transmis sous la forme de N_{L} flux de données. Le codeur vidéo 10 est un codeur H264/SVC, qui génère lors de l'étape une couche de base, codée selon le standard H264/AVC, et au moins une couche d'amélioration.

Puis, dans une étape de décision 21, le codeur vidéo 10 transmet au module de décision 11 l'ensemble des couches de données vidéo, et celui-ci détermine, en fonction notamment de la quantité de données à transmettre, du débit possible et de la largeur de bande disponible sur la liaison WAN 13 entre le terminal source 1 et le point d'accès au réseau 3, quel mode de transmission adopter pour envoyer ces couches de données.

Le débit possible en liaison montante depuis le terminal source 1 et la largeur de bande disponible peuvent s'avérer suffisants pour la transmission « en direct » de l'ensemble des couches de données vidéo depuis l'interface radio WAN 13 du terminal source 1. Dans ce cas, lors d'une étape 22 de transmission selon une liaison WAN des couches de données vidéo, le module de décision 11 transmet l'ensemble de ces couches au module d'adaptation 12 ainsi qu'une instruction d'envoi via la seule interface WAN 13. En réponse à cette instruction, le module d'adaptation 12 transmet toutes les couches à l'interface radio WAN, et ces couches sont envoyées par l'interface radio WAN 13, après ajout d'un en-tête MAC aux paquets de données constituant ces couches, vers le terminal de réception 5, via le point d'accès réseau 3.

Alternativement, si le débit en liaison montante ou la largeur de bande disponible est insuffisant pour la transmission de l'ensemble des couches par la liaison WAN du terminal source 1, le module de décision 11 initie une transmission coopérative avec les terminaux de coopération 2. Selon cette transmission coopérative, la seule couche de base est émise via la liaison WAN du terminal source 1, et tout ou partie des couches d'amélioration est envoyé via la liaison WLAN du terminal source aux terminaux de coopération 2 pour que ceux-ci transmettent ces couches d'amélioration via leur propre liaison WAN au terminal de réception 5.

A cette fin, lors d'une étape 25 d'initiation de la coopération, le module de décision 11 génère une requête de coopération, et cette requête est transmise par l'interface radio WLAN 14 par diffusion à l'ensemble des terminaux situés à portée.

Cette requête est reçue par les terminaux munis d'une interface radio WLAN 14 adaptée, et est transmise au module de décision 11 de chacun de ces terminaux. Chaque module de décision 11 décide alors, en fonction de critères tels que le niveau de charge de la batterie du terminal et la disponibilité du terminal pour établir une nouvelle communication, d'accepter ou de rejeter la requête, et chaque module de décision 11 acceptant cette requête transmet au terminal source 1 un message d'acceptation, par l'intermédiaire de l'interface WLAN 14, selon une liaison point à point.

Suite à l'envoi de la requête de coopération, le module de décision 11 du terminal source 1 reçoit donc N_{coop} messages d'acceptation, via l'interface WLAN 14 du terminal source. Le module de décision 11 choisit alors, parmi les N_{coop} terminaux ayant émis un message d'acceptation, N_{col} terminaux de coopération 2, en fonction notamment du nombre N_{L} de couches vidéo à transmettre. Ainsi, si le nombre N_{L} de couches vidéo à transmettre est inférieur ou égal au nombre de terminaux disponibles pour leur transmission (c'est-à-dire N_{coop}+1), le module de décision 11 choisit, parmi les N_{coop} terminaux, N_{L}-1 terminaux de coopération 2. Si le nombre N_{L} de couches vidéo à transmettre est supérieur au nombre de terminaux disponibles pour leur transmission, les N_{coop} terminaux sont choisis comme terminaux de coopération 2, et une partie des couches vidéo, qui sont des couches excédentaires, sera soit transmise par le terminal source 1, selon une liaison WAN, soit non transmise. Si le terminal source 1 ne reçoit aucun message d'acceptation, il peut choisir de ne transmettre au terminal de réception 5 que la couche de base de la séquence vidéo.

Puis, dans une étape 27 d'initiation de la transmission, le module de décision 11 transmet à chacun des terminaux de coopération 2, via l'interface radio WLAN 14 du terminal source 1, un message d'information contenant les paramètres de communication nécessaires pour la transmission de flux de données au terminal de réception 5 par une liaison WAN longue portée. Par exemple, si cette liaison WAN est une liaison WiMAX, ces paramètres comprennent le débit des données et le type de connexion (UGS ou rtPS par exemple). Ces paramètres comprennent également des identifiants de connexion, tels que les numéros de port source et de destination, et l'adresse IP du terminal source 1 et du terminal de réception 5. A réception de ce message, les terminaux de coopération 2 ouvrent, si nécessaire, une connexion WAN longue portée selon les paramètres de communication reçus.

Le module de décision 11 du terminal source 1 transmet alors au module d'adaptation 12 de ce terminal l'ensemble des couches vidéo créées par le codeur vidéo 10, ainsi qu'une requête indiquant quels sont les couches d'amélioration qui doivent être transmises vers l'interface WLAN 14 courte portée, pour être ensuite envoyés aux terminaux de coopération 2, quelle est la couche de base, qui doit être transmise vers l'interface WAN 13 longue portée pour être envoyée directement vers le terminal de réception 5, et éventuellement quelles couches doivent être supprimées.

En réponse à cette requête, le module d'adaptation 12 supprime les éventuelles couches excédentaires, transmet les couches d'amélioration non supprimées à l'interface WLAN 14, et la couche de base à l'interface WAN 13.

Les couches d'amélioration ne sont pas émises en continu vers les terminaux de coopération 2, mais seulement pendant les trames descendantes de la liaison WAN du terminal source 1, c'est-à-dire les périodes pendant lesquelles le terminal source 1 n'émet pas à longue portée.

Ainsi, dans une étape 29 de transmission WLAN des couches d'amélioration, l'interface WLAN 14 du terminal source 1 transmet à chaque terminal de coopération 2 un ensemble de paquets de données d'une couche d'amélioration donnée, après encapsulation de ces paquets. De manière avantageuse, la transmission des paquets est réglée selon l'algorithme du tourniquet : l'interface WLAN 14 transmet successivement à chaque terminal de coopération 2 un paquet de la couche d'amélioration associée à ce terminal, jusqu'à la fin de la trame descendante de la liaison WAN.

Par ailleurs, la transmission des paquets est contrôlée par le protocole RTCP (Real-time Transfert Control Protocole), qui prévoit l'envoi périodique, par les destinataires des paquets, c'est-à-dire les terminaux de coopération 2, de paquets d'acquittement au terminal source 1. Ainsi, le terminal source 1 peut déterminer quels terminaux reçoivent effectivement les paquets émis lors de l'étape 29. Les paquets d'acquittement, reçus par l'interface WLAN 14 du terminal source 1, sont transmis au module de décision 11 de ce terminal, qui peut décider, si l'un des terminaux de coopération 2 ne reçoit pas les paquets dont il est le destinataire, de supprimer ce terminal de la liste des terminaux de coopération. Le module de décision 11 peut alors choisir de supprimer le flux d'amélioration associé à ce terminal, ou de rechercher de nouveaux terminaux aptes à coopérer, selon une nouvelle étape 25 d'initiation de la coopération.

Suite à l'étape 29, c'est-à-dire pendant la trame montante de la liaison WAN du terminal source 1, les terminaux de coopération 2 émettent lors d'une étape 31 de transmission WAN des couches d'amélioration tout ou partie des paquets reçus lors de l'étape 29 vers le terminal de réception 5, via le point d'accès réseau 3. A cette fin, les paquets reçus par l'interface WLAN 14 de chaque terminal de coopération 2 sont désencapsulés par cette interface WLAN 14, transmis au module de décision 11 du terminal, qui aiguille ces paquets, via le module d'adaptation 12, vers l'interface WAN 13 du terminal. Après encapsulation de ces paquets, en incluant notamment dans leur en-tête les identifiants de connexion reçus lors de l'étape 27 d'initiation de la transmission, l'interface WAN 13 émet tout ou partie de ces paquets vers le terminal de réception 5.

Parallèlement, dans une étape 33 de transmission WAN de la couche de base, l'interface WAN 13 du terminal source 1 envoie un ensemble de paquets de la couche de base, après encapsulation de ces paquets, vers le terminal de réception 5, via le point d'accès réseau 3.

Ainsi, le terminal source 1 et les terminaux de coopération 2 émettent en même temps, et potentiellement sur le même canal de transmission, des données vers le point d'accès réseau 3. Les transmissions WAN depuis ces terminaux 1 et 2 utilisent une méthode de modulation permettant plusieurs transmissions en parallèle par des terminaux différents, par exemple la modulation OFDMA (Orthogonal frequency-division multiple access).

A la fin des étapes 31 et 33, c'est-à-dire à la fin de la trame montante de la liaison WAN du terminal source 1, le terminal source 1 émet, lors d'une nouvelle étape 29, de nouveaux paquets de chaque couche d'amélioration aux terminaux de coopération 2, pendant une nouvelle trame descendante de la liaison WAN. Cette étape 29 est elle-même suivie de nouvelles étapes 31 et 33 d'émission de paquets vers le terminal de réception 5.

Ainsi, le terminal source 1 émet successivement, pendant les trames descendantes et montantes de la liaison WAN, des paquets de données des couches d'amélioration aux terminaux de coopération 2, et des paquets de données de la couche de base vers le terminal de réception 5. Parallèlement, chaque terminal de coopération 2 reçoit, lors de plusieurs étapes 29, des paquets de données d'une couche d'amélioration donnée, et émet ces paquets vers le terminal de réception 5 au fur et à mesure de leur réception.

Lors d'une étape 35 d'acheminement sur le réseau, parallèle aux étapes 31 et 33 ou à l'étape 22, le point d'accès réseau 3 reçoit les paquets de chacune des couches, émis par le terminal source 1 et les terminaux de coopération 2 lors des étapes 31 et 33, ou par le terminal source 1 seul lors de l'étape 22, désencaspule ces paquets et les envoie à travers le réseau 4 au terminal de réception 5. Celui-ci reçoit donc de manière continue, dans une étape 37 de réception des couches de données vidéo, plusieurs flux de données vidéo de mêmes source et destination.

On comprend ainsi de la description qui précède comment le procédé de transmission selon l'invention permet d'augmenter le débit de transmission d'une séquence vidéo en liaison montante.

Il devra toutefois être compris que l'exemple de réalisation présenté ci-dessus n'est pas limitatif.

Notamment, le codage de la séquence vidéo transmise n'est pas nécessairement un codage selon la norme H264/SVC, mais il peut s'agir de tout codage permettant de décomposer une séquence vidéo en une couche de base, permettant l'obtention d'une séquence vidéo dégradée, et au moins une couche d'amélioration, complémentaire à la couche de base. De plus, le terminal source ne comporte pas nécessairement de codeur vidéo, et la séquence vidéo peut avoir été codée, préalablement à sa transmission, par un dispositif autre que le terminal source.

De plus, les terminaux de coopération peuvent être différents du terminal source. Notamment, le module de décision des terminaux de coopération ne comprend pas nécessairement de moyens pour initier une transmission coopérative.

Par ailleurs, selon un autre mode de réalisation de l'invention, le point d'accès réseau n'est pas unique, et les paquets de données sont envoyés vers le terminal de réception via plusieurs points d'accès réseau différents. L'interface radio longue portée WAN de l'un ou de plusieurs terminaux de coopération peut ainsi être d'une autre technologie que l'interface WAN du terminal source. De plus, le point d'accès réseau peut être lui-même le destinataire de la séquence vidéo.

La transmission des paquets depuis le terminal source vers les terminaux de coopération peut ne pas utiliser le protocole RTCP. Avantageusement, le protocole utilisé pour cette transmission prévoit l'envoi périodique de paquets d'acquittement par les terminaux de coopération, par exemple des acquittements MAC. Par ailleurs, si le débit en liaison montante le permet, le terminal source peut émettre à la fois la couche de base et une ou plusieurs couches d'amélioration par sa liaison longue portée WAN, et peut transmettre à chaque terminal de coopération une ou plusieurs couches d'amélioration.

## Revendications

1. Procédé de transmission d'une séquence vidéo depuis un terminal émetteur (1) comportant au moins une interface radio de courte portée (14) et une interface radio de longue portée (13) vers au moins un terminal récepteur (5), **caractérisé en ce qu'**il comprend les étapes suivantes :
- segmentation (20) de ladite séquence vidéo en une couche de base permettant l'obtention d'une séquence vidéo de basse qualité et au moins une couche d'amélioration, complémentaire à ladite couche de base, et permettant en combinaison avec la couche de base l'obtention d'une séquence vidéo de meilleure qualité,
- transmission (33) par ladite interface radio de longue portée (13) du terminal émetteur (1) d'au moins toute la couche de base vers ledit terminal récepteur (5),
- transmission (29) par ladite interface radio de courte portée (14) du terminal émetteur (1) d'au moins toute la couche d'amélioration vers au moins un terminal de coopération (2) comprenant au moins une interface radio de courte portée (14) et une interface radio de longue portée (13),
- transmission (31), par ladite interface radio de longue portée (13) dudit terminal de coopération (2), d'au moins toute la couche d'amélioration vers ledit terminal récepteur (5),
la transmission (33) par ladite interface radio de longue portée (13) du terminal émetteur (1) d'au moins toute la couche de base vers ledit terminal récepteur (5) et la transmission (31), par ladite interface radio de longue portée (13) dudit terminal de coopération (2), d'au moins toute la couche d'amélioration vers ledit terminal récepteur (5) étant réalisées concomitamment.

2. Procédé de transmission selon la revendication 1, **caractérisé en ce qu'**il comprend en outre une étape (25) d'initiation de coopération, comprenant :
- la diffusion par ladite interface radio de courte portée (14) du terminal émetteur (1) d'une requête de coopération, et
- la transmission par l'interface radio de courte portée (14) dudit terminal de coopération (2) audit terminal émetteur (1) d'un message d'acceptation de coopération.

3. Procédé de transmission selon l'une des revendications précédentes, **caractérisé en ce qu'**il comprend en outre une étape (27) d'initiation de la transmission, comprenant l'envoi par ladite interface radio de courte portée (14) du terminal émetteur (1) audit terminal de coopération (2) d'un message comprenant des paramètres de connexion pour l'ouverture par le terminal de coopération (2) d'une liaison de longue portée, et des identifiants de connexion comprenant les numéros de port source et de destination, et une adresse du terminal émetteur (1) et du terminal récepteur (5).

4. Procédé de transmission selon l'une des revendications précédentes, dans lequel ladite interface radio longue portée (13) du terminal émetteur (1) communique selon des trames de communication comprenant successivement des trames descendantes et des trames montantes, et **caractérisé en ce que** ladite transmission (29) par l'interface radio de courte portée (14) du terminal émetteur (1) de la couche d'amélioration vers ledit terminal de coopération (2) comprend une étape de transmission (29) de données vers ledit terminal de coopération (2) pendant au moins une desdites trames descendantes, et **en ce que** ladite transmission (33) par l'interface radio de longue portée (13) du terminal émetteur (1) de la couche de base et ladite transmission (31), par l'interface radio de longue portée dudit terminal de coopération (2), de la couche d'amélioration comprennent des étapes de transmission de données desdites couches de base et d'amélioration respectivement pendant au moins une desdites trames montantes.

5. Procédé de transmission selon l'une des revendications précédentes, **caractérisé en ce qu'**il comprend en outre une étape de réception desdites couches de base et d'amélioration par un point d'accès réseau (3), et une étape de transmission depuis ledit point d'accès réseau (3), vers ledit terminal récepteur (5), desdites couches de base et d'amélioration.

6. Système de transmission d'une séquence vidéo vers au moins un terminal récepteur (5), comprenant un terminal émetteur (1) comportant au moins une interface radio de courte portée (14) et une interface radio de longue portée (13), et au moins un terminal de coopération (2) comportant au moins une interface radio de courte portée (14) et une interface radio de longue portée (13), **caractérisé en ce que** ledit terminal émetteur (1) comprend en outre :
- des moyens (10) pour segmenter ladite séquence vidéo en une couche de base permettant l'obtention d'une séquence vidéo dégradée et au moins une couche d'amélioration, complémentaire à ladite couche de base,
- des moyens (11, 12) pour commander la transmission (33) par ladite interface radio de longue portée (13) du terminal émetteur (1) d'au moins toute la couche de base vers ledit terminal récepteur (5), et
- des moyens (11, 12) pour commander la transmission (29) par ladite interface radio de courte portée (14) du terminal émetteur (1) d'au moins toute la couche d'amélioration vers ledit terminal de coopération (2),
et **en ce que** ledit terminal de coopération (2) comprend des moyens (11, 12) pour commander la transmission (31), par l'interface radio de longue portée (13) du terminal de coopération (2), d'au moins toute la couche d'amélioration vers ledit terminal récepteur (5), la transmission (33) par ladite interface radio de longue portée (13) du terminal émetteur (1) d'au moins toute la couche de base vers ledit terminal récepteur (5) et la transmission (31), par ladite interface radio de longue portée (13) dudit terminal de coopération (2), d'au moins toute la couche d'amélioration vers ledit terminal récepteur (5) étant réalisées concomitamment.

7. Système de transmission d'une séquence vidéo selon la revendication 6, **caractérisé en ce que** ledit terminal émetteur (1) comprend en outre des moyens pour déterminer le débit possible entre l'interface radio de longue portée (13) du terminal émetteur (1) et le terminal de réception (5),

8. Système de transmission d'une séquence vidéo selon l'une des revendications 6 et 7, **caractérisé en ce que** ledit terminal émetteur (1) comprend en outre des moyens (11) pour générer une requête de coopération et pour commander la diffusion de ladite requête par son interface radio courte portée (14), et **en ce que** ledit terminal de coopération (2) comprend des moyens (11) pour générer un message d'acceptation de coopération et pour commander la transmission dudit message d'acceptation de coopération audit terminal émetteur (1).

9. Système de transmission d'une séquence vidéo selon l'une des revendications 6 à 8, **caractérisé en ce que** ledit terminal émetteur (1) comprend en outre des moyens (11) pour générer un message d'information contenant des paramètres de communication nécessaires pour la transmission (31) par ledit terminal de coopération (2) de ladite couche d'amélioration et pour commander la transmission dudit message d'information audit terminal de coopération (2).

## Patentansprüche

1. Verfahren zur Übertragung einer Videosequenz von einem Sendeendgerät (1), das mindestens eine Funkschnittstelle (14) kurzer Reichweite und eine Funkschnittstelle (13) großer Reichweite aufweist, zu mindestens einem Empfangsendgerät (5), **dadurch gekennzeichnet, dass** es die folgenden Schritte umfasst:
- Segmentierung (20) der Videosequenz in eine Basisschicht, die den Erhalt einer Videosequenz mit geringer Qualität ermöglicht, und in mindestens eine Verbesserungsschicht, komplementär zu der Basisschicht, und die in Kombination mit der Basisschicht den Erhalt einer Videosequenz besserer Qualität ermöglicht,
- Übertragung (33) zumindest der gesamten Basisschicht über die Funkschnittstelle (13) großer Reichweite des Sendeendgeräts (1) zu dem Empfangsendgerät (5),
- Übertragung (29) zumindest der gesamten Verbesserungsschicht über die Funkschnittstelle (14) kurzer Reichweite des Sendeendgeräts (1) zu mindestens einem Zusammenarbeitsendgerät (2), das zumindest eine Funkschnittstelle (14) kurzer Reichweite und eine Funkschnittstelle (13) großer Reichweite umfasst,
- Übertragung (31) zumindest der Verbesserungsschicht über die Funkschnittstelle (13) großer Reichweite des Zusammenarbeitsendgerätes (2) zu dem Empfangsendgerät (5),
wobei die Übertragung (33) zumindest der gesamten Basisschicht über die Funkschnittstelle (13) großer Reichweite des Sendeendgeräts (1) zu dem Empfangsendgerät (5) und die Übertragung (31) zumindest der gesamten Verbesserungsschicht über die Funkschnittstelle (13) großer Reichweite des Zusammenarbeitsendgerätes (2) zu dem Empfangsendgerät (5) gleichzeitig durchgeführt wird.

2. Verfahren zur Übertragung nach Anspruch 1, **dadurch gekennzeichnet, dass** es außerdem einen Schritt (25) der Initiierung der Zusammenarbeit umfasst, der umfasst:
- die Aussendung einer Anfrage zur Zusammenarbeit über die Funkschnittstelle kurzer Reichweite (14) des Sendeendgeräts (1), und
- die Übertragung einer Nachricht der Annahme der Zusammenarbeit über die Funkschnittstelle (14) kurzer Reichweite des Zusammenarbeitsendgerätes (2) an das Sendeendgerät (1).

3. Verfahren zur Übertragung nach einem der vorhergehenden Ansprüche, **dadurch gekennzeichnet, dass** es außerdem einen Schritt (27) der Initiierung der Übertragung umfasst, der das Schicken einer Nachricht von der Funkschnittstelle (14) kurzer Reichweite des Sendeendgeräts (1) an das Zusammenarbeitsendgeräts (2) umfasst, wobei die Nachricht Verbindungsparameter für die Eröffnung einer Verbindung großer Reichweite durch das Zusammenarbeitsendgerät (2) und Zugangsdaten umfasst, die Quell- und Ziel-Portnummern und eine Adresse des Sendeendgeräts (1) und des Empfangsendgerät (5) umfassen.

4. Verfahren zur Übertragung nach einem der vorhergehenden Ansprüche, bei dem die Funkschnittstelle (13) großer Reichweite des Sendeendgeräts (1) gemäß Kommunikationsrahmen kommuniziert, die aufeinanderfolgend Downlink-Rahmen und Uplink-Rahmen umfassen, und **dadurch gekennzeichnet, dass** die Übertragung (29) der Verbesserungsschicht von der Funkschnittstelle (14) kurzer Reichweite des Sendeendgeräts (1) zu dem Zusammenarbeitsendgerät (2) einen Schritt der Übertragung (29) von Daten zu dem Zusammenarbeitsendgerät (2) während mindestens einem der Downlink-Rahmen umfasst und dass die Übertragung (33) der Basisschicht von der Funkschnittstelle (13) großer Reichweite des Sendeendgeräts (1) und die Übertragung der Verbesserungsschicht von der Funkschnittstelle großer Reichweite des Zusammenarbeitsendgeräts (2) Schritte zur Übertragung von Daten jeweils der Basisschicht und der Verbesserungsschicht während mindestens einem der Uplink-Rahmen umfassen.

5. Verfahren zur Übertragung nach einem der vorhergehenden Ansprüche, **dadurch gekennzeichnet, dass** es außerdem einen Schritt des Empfangs der Basisschicht und der Verbesserungsschicht durch einen Netzzugangspunkt (3) und einen Schritt der Übertragung von dem Netzzugangspunkt (3) der Basisschicht und der Verbesserungsschicht an das Empfangsendgerät (5) umfasst.

6. Übertragungssystem einer Videosequenz an mindestens ein Empfangsendgerät (5), das ein Sendeempfangsgerät (1), das mindestens eine Funkschnittstelle (14) kurzer Reichweite und eine Funkschnittstelle (13) großer Reichweite aufweist, und mindestens ein Zusammenarbeitswendgerät (2), das mindestens eine Funkschnittstelle (14) kurzer Reichweite und eine Funkschnittstelle (13) großer Reichweite aufweist, umfasst, **dadurch gekennzeichnet, dass** das Sendeendgerät (1) außerdem umfasst:
- Mittel (10) zum Segmentieren der Videosequenz in eine Basisschicht, die den Erhalt einer verschlechterten Videosequenz gestattet, und in mindestens eine Verbesserungsschicht, komplementär zu der Basisschicht,
- Mittel (11, 12) zum Steuern der Übertragung (33) zumindest der gesamten Basisschicht von der Funkschnittstelle (13) des Sendeenderäts (1) an das Empfangsendgerät (5), und
- Mittel (11, 12) zum Steuern der Übertragung (29) zumindest der gesamten Verbesserungsschicht von der Funkschnittstelle (14) kurzer Reichweite des Sendeendgeräts (1) an das Zusammenarbeitsendgerät (2),
und dass das Zusammenarbeitsendgerät (2) Mittel (11, 12) zum Steuern der Übertragung (31) mindestens der gesamten Verbesserungsschicht von der Funkschnittstelle (13) großer Reichweite des Zusammenarbeitsendgeräts (2) an das Empfangsendgerät (5) umfasst, wobei die Übertragung (33) zumindest der gesamten Basisschicht von der Funkschnittstelle großer Reichweite (13) des Sendeenderäts (1) an das Empfangsendgerät (5) und die Übertragung (31) mindestens der gesamten Verbesserungsschicht von der Funkschnittstelle großer Reichweite (13) des Zusammenarbeitsendgeräts (2) an das Empfangsendgerät (5) gleichzeitig durchgeführt wird.

7. System zur Übertragung einer Videosequenz nach Anspruch 6, **dadurch gekennzeichnet, dass** das Sendeendgerät (1) außerdem Mittel zum Bestimmen der möglichen Datenrate zwischen der Funkschnittstelle (13) großer Reichweite des Sendeendgeräts (1) und dem Empfangsendgerät (5) umfasst.

8. System zur Übertragung einer Videosequenz nach einem der Ansprüche 6 und 7, **dadurch gekennzeichnet, dass** das Sendeendgerät (1) au-βerdem Mittel (11) zum Erzeugen einer Anfrage zur Zusammenarbeit und zum Steuern der Aussendung der Anfrage von seiner Funkschnittstelle (14) kurzer Reichweite umfasst, und dass das Zusammenarbeitsendgerät (2) Mittel (11) zum Erzeugen einer Annahmenachricht für die Zusammenarbeit und zum Steuern der Übertragung der Annahmenachricht zur Zusammenarbeit an das Sendeendgerät (1) umfasst.

9. System zur Übertragung einer Videosequenz nach einem der Ansprüche 6 bis 8, **dadurch gekennzeichnet, dass** das Sendeendgerät (1) au-βerdem Mittel (11) zum Erzeugen einer Informationsnachricht, die Kommunikationsparameter enthält, die für die Übertragung (31) der Verbesserungsschicht von dem Zusammenarbeitsendgerät (2) notwendig sind, und zum Steuern der Übertragung der Informationsnachricht an das Zusammenarbeitsendgerät (2) umfasst.

## Claims

1. A method for transmitting a video sequence from a transmitting terminal (1) including at least one short-range radio interface (14) and one long-range radio interface (13) towards at least one receiving terminal (5), **characterized in that** it comprises the following steps:
- segmenting (20) said video sequence into a base layer making it possible to obtain a low-quality video sequence and at least one improvement layer, complementary to said base layer, and making it possible to obtain a better quality video sequence in combination with the base layer,
- transmission (33), by said long-range radio interface (13) of the transmitting terminal (1), of at least the entire base layer towards said receiving terminal (5),
- transmission (29), by said short-range radio interface (14) of the transmitting terminal (1), of at least the entire improvement layer towards at least one cooperation terminal (2) comprising at least one short-range radio interface (14) and one long-range radio interface (13),
- transmission (31), by said long-range radio interface (13) of said cooperation terminal (2), of at least the entire improvement layer towards said receiving terminal (5), and
the transmission (33) by said long-range radio interface (13) of the transmitting terminal (1) of at least the entire base layer towards said receiving terminal (5) and the transmission (31), by said long-range radio interface (13) of said cooperation terminal (2), of at least all of the improvement layer towards said receiving terminal (5) are done concomitantly.

2. The transmission method according to claim 1, **characterized in that** it also comprises a step (25) for initiating cooperation, comprising:
- the broadcast by said short-range radio interface (14) of the transmitting terminal (1) of a cooperation request, and
- the transmission by the short-range radio interface (14) of said cooperation terminal (2) to said transmitting terminal (1) of a cooperation acceptance message.

3. The transmission method according to one of the preceding claims, **characterized in that** it also comprises a step (27) for initiating the transmission, comprising the sending by said short-range radio interface (14) of the transmitting terminal (1) to the cooperation terminal (2) of a message comprising connection parameters for opening, by the cooperation terminal (2), of a long-range connection, and connection identifiers comprising the source and destination port numbers, and an address of the transmitting terminal (1) and the receiving terminal (5).

4. The transmission method according to one of the preceding claims, wherein said long-range radio interface (13) of the transmitting terminal (1) communicates according to communication frames successively comprising descending frames and ascending frames, and **characterized in that** said transmission (29) by the short-range radio interface (14) of the transmitting terminal (1) of the improvement layer towards said cooperation layer (2) comprises a step (29) for transmitting data towards said cooperation terminal (2) during at least one of said descending frames, and **in that** said transmission (33) by the long-range radio interface (13) of the transmitting terminal (1) of the base layer and said transmission (31), by the long-range radio interface of said cooperation terminal (2), of the improvement layer comprise steps for transmitting data from said base and improvement layers, respectively, during at least one of said ascending frames

5. The transmission method according to one of the preceding claims, **characterized in that** it also comprises a step for receiving said base and improvement layers by a network access point (3), and a step for transmission from said network access point (3), towards said receiving terminal (5), of said base and improvement layers.

6. A system for transmitting a video sequence to at least one receiving terminal (5), comprising a transmitting terminal (1) including at least one short-range radio interface (14) and one long-range radio interface (13), and at least one cooperation terminal (2) including at least one short-range radio interface (14) and one long-range radio interface (13), **characterized in that** said transmitting terminal (1) also comprises:
- means (10) for segmenting said video sequence into a base layer making it possible to obtain a deteriorated video sequence and at least one improvement layer, complementary to said base layer,
- means (11, 12) for ordering the transmission (33) by said long-range radio interface (13) of the transmitting terminal (1) of at least the entire base layer towards said receiving terminal (5), and
- means (11, 12) for ordering the transmission (29) by said short-range radio interface (14) of the transmitting terminal (1) of at least the entire improvement layer towards said cooperation terminal (2),
and **in that** said cooperation terminal (2) comprises means (11, 12) for ordering the transmission (31), by the long-range radio interface (13) of the cooperation terminal (2), of at least the entire improvement layer towards said receiving terminal (5), the transmission (33) by said long-range radio interface (13) of the transmitting terminal (1) of at least the entire base layer towards said receiving terminal (5) and the transmission (31), by said long-range radio interface (13) of said cooperation terminal (2), of at least all of the improvement layer towards said receiving terminal (5) are done concomitantly.

7. The system for transmitting a video sequence according to claim 6, **characterized in that** the transmitting terminal (1) also comprises means for determining the possible throughput between the long-range radio interface (13) of the transmitting terminal (1) and the receiving terminal (5).

8. The system for transmitting a video sequence according to one of claims 6 to 7, **characterized in that** said transmitting terminal (1) also comprises means (11) for generating a cooperation request and for ordering the broadcast of said request via its short-range radio interface (14), and **in that** said cooperation terminal (2) comprises means (11) for generating a cooperation acceptance message and for ordering transmission of said cooperation acceptance message to said transmitting terminal (1).

9. The system for transmitting a video sequence according to one of claims 6 to 8, **characterized in that** said transmitting terminal (1) also comprises means (11) for generating an information message containing the communication parameters necessary for the transmission (31) by said cooperation terminal (2) of said improvement layer and to order the transmission of said information message to said cooperation terminal (2).
